# EUROPÄISCHE PATENTANMELDUNG

(11) **EP 0 638 757 A1**
(43) Veröffentlichungstag der Anmeldung: **15.02.1995**
(21) Anmeldenummer: 94111222.9
(22) Anmeldetag: 19.07.1994
(51) Int. Cl.: F16L 55/28, E03F 7/12, G01M 3/00

(54) **Vorrichtung zur Prüfung und/oder Reparatur von Kanälen**

(30) Priorität: 13.08.1993 DE 4327215
(71) Anmelder: Daimler-Benz Aerospace Aktiengesellschaft, D-81663 München (DE)
(72) Erfinder: Ertl, Herbert, D-82335 Berg (DE); Puttinger, Dietmar, D-80539 München (DE)

(57) **Zusammenfassung**

Die Vorrichtung zur Prüfung und/oder Reparatur von mit einem strömenden Fluid gefüllten Kanal besteht aus einer Aufwickeltrommel, einem Führungsseil (6), einer Umlenkanordnung für das Führungsseil, einem im wesentlichen zylindrischen Prüfkopf (2) und/oder einem im wesentlichen zylindrischen Reparaturgerät, wobei der Prüfkopf und das Reparaturgerät (10) mit einer Steuereinrichtung versehen ist, die sie unter dem Einfluß des strömenden Fluids an die Innenwand des Kanals drücken; beide Bauteile sind mit je mindestens einem Abstandssensor und mit je mindestens einem Abstandshalter versehen.

## Beschreibung

Die vorliegende Erfindung betrifft eine Vorrichtung zur Prüfung und/oder Reparatur von mit einem strömenden Fluid gefüllten Kanälen, Rohrleitungen und dgl., bestehend aus einer Aufwickeltrommel, einem Führungsseil, einer Umlenkanordnung für das Führungsseil, einem im wesentlichen zylindrischen Prüfkopf und/oder einem im wesentlichen zylindrischen Reparaturgerät.

Die ältere Patentanmeldung P 42 20 900 der Anmelderin beschreibt eine Vorrichtung zur Prüfung von Hohlräumen, wie Kanälen, Rohrleitungen, Kaminen und dgl., die mindestens einen Prüfkopf und eine mit dem Prüfkopf verbundene Vorschubeinrichtung aufweist, um den Prüfkopf in den zu inspizierenden Hohlräumen zu verschieben, wobei die Vorschubeinrichtung aus einem biegeflexiblen, aber schubsteifen Hohlkörper in Form eines armierten Schlauches oder Gliederhohlkörpers besteht. Diese Vorrichtung eignet sich für Hohlräume unterschiedlichen Durchmessers, die einfach, schnell und kostengünstig auf eine Länge von mehreren 100 Metern zu überprüfen sind. Die biegeflexible, aber schubsteife Vorschubeinrichtung ist dabei für den Transport auf einer Aufwickelhaspel aufgerollt, die auf der Ladefläche eines Transportfahrzeuges angeordnet ist.

Während des Einsatzes wird der biegeflexible Schlauch mit Hilfe eines mechanischen Antriebs, z. B. über einen Schwenkausleger und eine an ihm befestigte Umlenkrolle in einen meistens senkrecht verlaufenden Zugangsschacht zu einem zu inspizierenden Hohlraum, z. B. einen unterirdischen Abwasserkanal, eingeführt. Aufgrund der hohen Biegeflexibilität kann die Vorschubeinrichtung aus ihrer ursprünglichen Vorschubrichtung bis zu 90° abgelenkt werden, um so in den eigentlichen zu inspizierenden Hohlraum eingeführt zu werden.

Innerhalb der Vorschubeinrichtung sind dabei die Energieversorgungs- und Datenleitungen für sämtliche Meß-, Prüf-, Aufzeichnungs- und Arbeitsgeräte angeordnet, um die Daten zwischen dem an der Vorderseite der Vorschubeinrichtung angeordneten Prüfkopf und der Auswertestation auf dem Fahrzeug zu transportieren.

Es sind ferner Vorrichtungen zur Prüfung von Hohlräumen bekannt geworden, die mit einem eigenen Antrieb versehen sind und sich auf Rollen abstützen, die sich entlang der Kanalinnenwand bewegen. Derartige Vorrichtungen eignen sich insbesondere zur Überprüfung von leeren Kanälen oder Rohren oder solchen, die nur zum Teil mit einem Fluid gefüllt sind, wie Abwasserkanäle, von denen nur ein geringer Querschnitt durch das abzuführende Abwasser ausgefüllt ist.

Zur Überprüfung von mit einem strömenden Fluid gefüllten Kanälen, Rohrleitungen oder dgl. sind derartige Vorrichtungen ungeeignet, da ein geführtes Abrollen auf der Kanalinnenwand aufgrund des stromenden Fluids, z. B. in einer Erdöl-Pipeline oder einer Trinkwasserleitung, ausgeschlossen ist.

Aufgabe der vorliegenden Erfindung ist es, eine Vorrichtung zur Prüfung und/oder zur Reparatur von mit einem strömenden Fluid gefüllten Kanälen, Rohrleitungen und dgl. zu schaffen, mit der ein gleichmäßiges gesteuertes Abfahren der Innenwand der Kanäle bzw. Rohrleitungen gewährleistet ist.

Ausgehend von einer Vorrichtung der eingangs näher genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben.

Der mit Hilfe des Führungsseils in den Kanal eingeführte Prüfkopf und/oder das Reparaturgerät nutzen also die Energie des im Kanal strömenden Fluids aus, um den Prüfkopf bzw. das Reparaturgerät innerhalb des Kanals gerichtet zu bewegen. Aufgrund der Ausgestaltung der Steuereinrichtung kann sowohl der Prüfkopf als auch das Reparaturgerät an die Innenwand des Kanals geführt und an diese Innenwand angedrückt werden, wobei durch das Vorsehen von Abstandssensoren und Abstandshaltern der Vorteil erzielt wird, daß ein vorgegebener Abstand erreicht und beibehalten wird, um sowohl den Prüfkopf als auch das Reparaturgerät im richtigen Arbeitsabstand zu halten.

Die Bewegung des Prüfkopfes und des Reparaturgerätes im Kanal erfolgt mit Hilfe der Steuereinrichtung dergestalt, daß diese entweder eine schraubenförmige Bewegung oder aber eine mäanderförmige Bewegung ausführen, wobei bei letzterer der Prüfkopf bzw. das Reparaturgerät jeweils eine kreisförmige Bewegung um die Kanalmittelachse um 360° ausführt, anschließend um einen vorwählbaren Längsweg in Kanalrichtung entlangbewegt wird, um danach in umgekehrter Drehrichtung wieder eine kreisförmige Bewegung von 360° auszuführen. Mit dieser Art der Bewegung wird der Vorteil erzielt, daß eine Verdrillung mit einem fest eingespannten Führungsseil verhindert wird. Bei einer reinen schraubenförmigen Vorwärtsbewegung hingegen muß das Führungsseil mit einer verdrillungsfreien Lagerung am Prüfkopf bzw. dem Reparaturgerät befestigt werden.

Die Einführung von Prüfkopf und Reparaturgerät in den zu inspizierenden Kanal erfolgt über ein Umlenkrollensystem mit welchem u. a. auch eine Wegmessung und eine Geschwindigkeitsregelung durchführbar ist.

Im folgenden wird die Erfindung anhand der Zeichnung näher erläutert, in der ein vorteilhaftes Ausführungsbeispiel dargestellt ist. Es zeigen:
- Fig. 1: einen Querschnitt durch einen zu inspizierenden Kanal mit darin angeordnetem Prüfkopf;
- Fig. 2: schematisch den mäanderförmigen Weg des Prüfkopfes;
- Fig. 3: einen Längsschnitt durch eine vergrößerte Darstellung der Kanalwand und des Prüfkopfes;
- Fig. 4: einen Querschnitt im gleichen Maßstab wie Fig. 3;
- Fig. 5: einen Längsschnitt durch einen Teil der Kanalwand und ein Reparaturgerät;
- Fig. 6: eine Einzelheit des Reparaturgerätes und
- Fig. 7 und 8: den Einsatz von zusätzlichen Glocken.

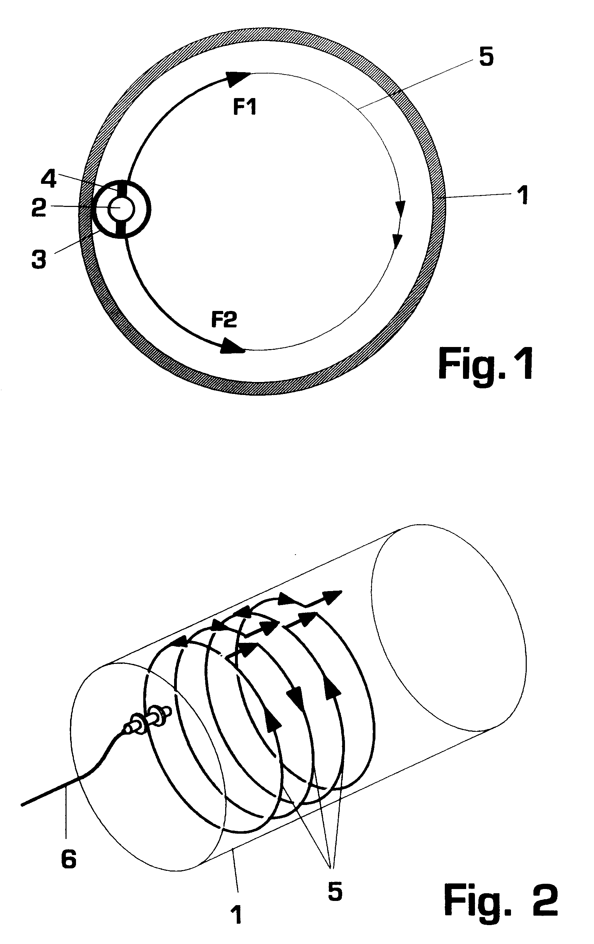

In Fig. 1 ist mit 1 die Wand eines mit einem strömenden Fluid, z. B. Frischwasser, gefüllten Kanals mit kreisförmigem Querschnitt bezeichnet, mit 2 ein Prüfkopf, der erfindungsgemäß mit Steuerflächen 4 und einem Abstandsring 3 versehen ist, aufgrund deren Ausgestaltung er in einem vorgegebenen Abstand entlang der Innenwand des Kanals 1 entweder in Richtung des Pfeiles F1 oder in Richtung des Pfeiles F2 bewegt wird. Der Prüfkopf 2 ist an seinem hinteren Ende mit einem Führungsseil 6 verbunden (Fig. 2), welches über eine (nicht dargestellte) Umlenkanordnung mit einer (ebenfalls nicht dargestellten) Aufwickeltromme außerhalb des zu untersuchenden Kanals verbunden ist. Die Steuerflächen 4 werden durch eine nicht näher dargestellte Steuereinrichtung derart verschwenkt, daß der im wesentlichen zylindrische Prüfkopf 2 durch die Energie des im Kanal 1 strömenden Mediums weg von dessen Mittelachse in Richtung Kanalinnenwand gedrückt wird und daß er zugleich eine schraubenförmige bzw. mäanderförmige Bewegung entlang dieser Kanalinnenwand ausführt.

Um ein Verdrillen des Prüfkopfes 2 mit dem Führungsseil 3 zu verhindern, ist die von dem Prüfkopf innerhalb des Kanals ausgeführte Bewegung, wie es in Fig. 2 dargestellt ist, vorteilhafterweise mäanderförmig. Dies bedeutet, daß der Prüfkopf eine kreisförmige Bewegung von 360° entlang der Innenwand des Kanals 1 ausführt, anschließend durch geeignete Verstellung der Steuerflächen um einen vorgegebenen Längsweg in Richtung des strömenden Mediums verfahren wird und eine zweite kreisförmige Bewegung entlang der Innenwand des Kanals 1 in entgegengesetzter Richtung durchführt, bevor er erneut um ein vorgegebenes Stück in Längsrichtung verfahren wird. Der Prüfkopf ist sowohl mit Abstandssensoren an seiner Oberfläche versehen, welche den Abstand zur Innenwand des Kanals 1 messen, als auch mit einem Abstandsring 3, wobei bei einem Ausführungsbeispiel der Durchmesser des Abstandsring 3 variabel ist, so daß auch der Abstand des Prüfkopfes 2 von der Innenwand des Kanals 1 einstellbar ist.

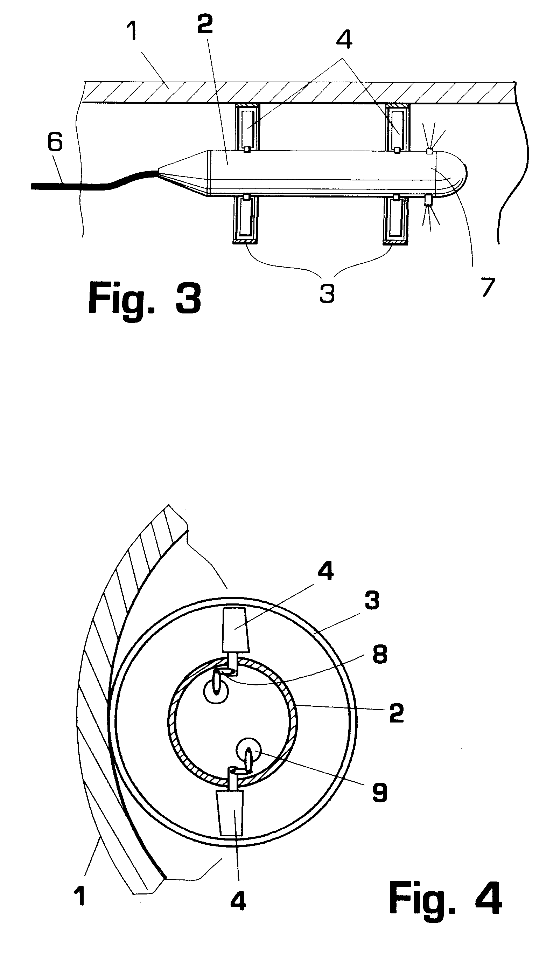

Fig. 3 zeigt in vergrößerter Darstellung einen Längsschnitt durch einen Prüfkörper 2 mit den Steuerflächen 4 und der verdrillfreien Verbindung mit dem Führungsseil 6. Mit 3 sind zwei Abstandsringe bezeichnet, die den vorgegebenen Abstand zur Innenwand des Kanals 1 gewährleisten. Mit 7 ist eine Prüf- und Meßeinrichtung bezeichnet, die in herkömmlicher Art und Weise eine Inspektion des Zustandes der Innenwand des Kanals 1 ermöglicht. Fig. 4 zeigt einen Längsschnitt durch den Prüfkopf 2, wobei gleiche Teile mit gleichen Bezugszeichen versehen sind. Mit 8 ist hierbei die Dreh- und/oder Schwenkachse für die Steuerfläche 4 angedeutet und mit 9 ein Aktuator für diese Steuerflächen, deren Stellung den Weg des Prüfkopfes innerhalb des fluidgefüllten Kanals bestimmt.

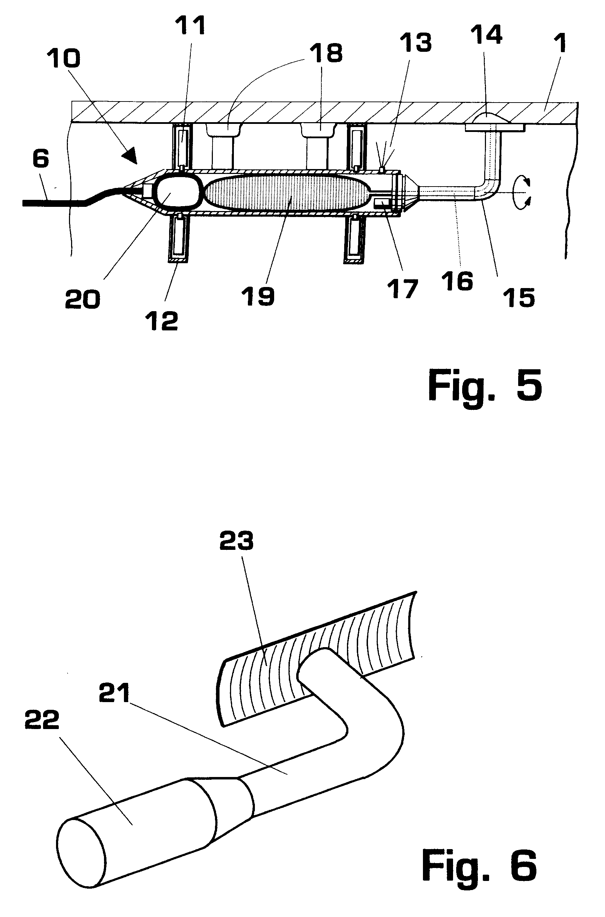

Anstelle des Prüfkopfes oder aber in Vorschubrichtung gesehen diesem nachgeordnet, kann ein Reparaturgerät vorgesehen sein, von dem ein Längsschnitt in Fig. 5 dargestellt ist. Dieses Reparaturgerät dient dazu, Risse bzw. Löcher in der Innenwand des Kanals schnell und problemlos zu reparieren. Zu diesem Zweck und zur geführten Ausführung derselben Bewegungen wie der Prüfkopf 2 ist das Reparaturgerät 10 ebenfalls mit einer Steuereinrichtung versehen, welche Steuerflächen 11 und Abstandsringe 12 aufweisen. Mit 13 ist eine Steuersonde bezeichnet, mit 14 ein in der Wand des Kanals 1 aufgespürtes Loch bezeichnet, mit 15 ein schwenkbar an der Stirnseite des Reparaturgerätes 10 angeordneter Arbeitsarm mit einem in diesem vorgesehenen Hohlraum 16, welcher mit einer Vorratskammer 19 in Verbindung steht, in der eine geeignete Reparatur- bzw. Füllmasse zum Ausfüllen des Loches 14 enthalten ist. Mit 17 ist ein Antrieb für den schwenkbaren, koaxial zur Längsachse des Reparaturgerätes 10 angesetzten und um 90° abgeknickten Arbeitsarm 15 bezeichnet, wobei die Knickstelle derart gewählt ist, daß der abgeknickte, unter 90° zur Längsachse des Reparaturgerätes angeordnete Teil des Arbeitsarmes sich bis in unmittelbare Nähe der Innenwand des Kanals 1 erstreckt.

Die Vorratskammer 19 ist mit einer geeigneten Dosiervorrichtung, z. B. einer Druckblase 20, oder einer (nicht dargestellten) Pumpe versehen, um eine bestimmte Menge des in der Vorratskammer 19 vorhandenen Dichtmittels durch den hohlen Arbeitsarm 15 zu drücken und so das durch den Prüfkopf aufgespürte Loch in der Kanalinnenwand zu verschließen. Um während dieses Reparaturvorgangs das Reparaturgerät 10 an Ort und Stelle zu halten, unabhängig von der Energie des vorbeiströmenden Fluids im Kanals, sind mehrere Saugfüße 18 vorgesehen, die nach Erreichen der Arbeitsstellung ein Anhaften des Reparaturgerätes 10 an der Innenwand des Kanals 1 ermöglichen.

In unmittelbarer Nähe des Arbeitsarmes 15 kann, wie es in Fig. 6 angedeutet ist, eine verschwenkbare Spachteleinrichtung vorgesehen sein, bestehend aus einer Halterung 22, einem Schwenkarm 21, an dessen abgeknickten Ende eine Spachtelplatte 23 vorgesehen ist, um unmittelbar nach dem Aufbringen der im Fluid aushärtbaren Abdichtmasse in dem Loch 14 dessen Oberfläche zu glätten und der Innenwand des Kanals 1 anzupassen. Als Dichtmittel eignet sich schnell abbindender Beton oder aber eine geeignete Kunststoffmischung mit und ohne Füll- oder Faserstoffe für die aufgespürten Ausbruchstellen oder Spalte in der Innenwand des Kanals. Die Spachteleinrichtung zum Glätten der Oberfläche kann dabei gleichzeitig mit dem Einfüllen oder aber in einem eigenen Arbeitsvorgang eingesetzt werden.

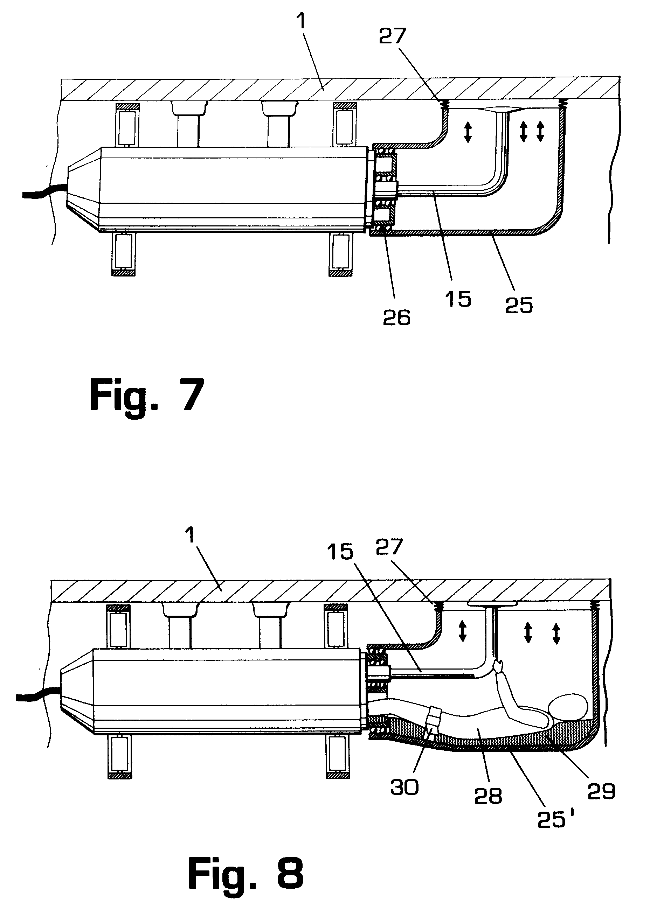

Dem Reparaturgerät kann eine Glocke 25 zugeordnet sein, die z.B. den Arbeitsarm umgibt, wie es in Fig. 7 dargestellt ist, und die mittels Druckluftzufuhr von Wasser freigehalten werden kann; die Glocke 25 ist vorteilhafterweise über ein Drucklager mit dem Reparaturgerät verbunden, so daß sie eine Drehbewegung um dessen Längsachse ausführen kann und den Bereich des abgebogenen, an der Kanalinnenwand anliegenden Teils des Arbeitsarmes ständig umgibt; die Abdichtung zur Kanalwandung erfolgt über eine flexible Dichtung 27.

Fig. 8 zeigt eine Ausgestaltung der Glocke 25' für den Einsatz in Kanälen großen Durchmessers, deren Abmessungen den Einstieg einer Bedienungsperson 28 ermöglichen; diese liegt z.B. auf einer gepolsterten Unterlage 29 und ist mit Halterungen 30 an dieser befestigt.

Das Reparaturgerät kann ebenso wie der Prüfkopf mit Sensoren, Kameras und ggf. mit Beleuchtungseinrichtungen versehen sein, um die ausgeführten Arbeiten vom Transportfahrzeug aus zu überwachen bzw. aufzuzeichnen. Ferner kann die Vorratskammer anstelle einer Druckblase mit einer elektrischen oder hydraulischen Pumpe versehen sein oder aber über einen Förderschlauch mit einem Dichtmittelvorrat außerhalb des Kanals verbunden sein.

## Patentansprüche

1. Vorrichtung zur Prüfung und/oder Reparatur von mit einem strömenden Fluid gefüllten Kanälen, Rohrleitungen und dgl., bestehend aus einer Aufwickeltrommel, einem Führungsseil, einer Umlenkanordnung für das Führungseil, einem im wesentlichen zylindrischen Prüfkopf und/oder einem im wesentlichen zylindrischen Reparaturgerät, dadurch gekennzeichnet, daß der Prüfkopf mit einer Steuereinrichtung versehen ist, die ihn unter dem Einfluß des strömenden Fluids an die Innenwand des Kanals drückt, daß der Prüfkopf mit mindestens einem Abstandshalter versehen ist.

2. Vorrichtung nach Anspruch 1, dadurch gekennzeichnet, daß die Steuereinrichtung eine Vielzahl über die Oberfläche des Prüfkopfes verteilter verstellbarer Steuerflächen aufweist.

3. Vorrichtung nach Ansprüchen 1 und 2, dadurch gekennzeichnet, daß die Steuereinrichtung mit einer Anordnung zur Messung des Rotationswinkels um die Kanallängsachse verbunden ist.

4. Vorrichtung nach Ansprüchen 1 bis 3, dadurch gekennzeichnet, daß der Abstandshalter ein den Prüfkopf konzentrisch umgebender, mit ihm verbundener Ring ist.

5. Vorrichtung nach Anspruch 1, dadurch gekennzeichnet, daß das Reparaturgerät mit einer Steuereinrichtung, mit mindestens einem Abstandssensor, mit mindestens einem Abstandshalter und mit einer Vielzahl über seine Oberfläche verteilter verstellbarer Steuerflächen versehen ist, sowie einen verschwenkbaren hohlen Arbeitsarm aufweist, der mit einer Vorratskammer für ein Abdichtmaterial im Arbeitsgerät verbunden ist.

6. Vorrichtung nach Anspruch 5, dadurch gekennzeichnet, daß die Vorratskammer mit einer Druckblase verbunden ist.

7. Vorrichtung nach Anspruch 5, dadurch gekennzeichnet, daß die Vorratskammer mit einer Pumpe verbunden ist.

8. Vorrichtung nach Anspruch 5, dadurch gekennzeichnet, daß die Vorratskammer mit einem sich bis zur Aufwickeltrommel erstreckenden Förderschlauch verbunden ist.

9. Vorrichtung nach einem der Ansprüche 5 bis 8, dadurch gekennzeichnet, daß das Reparaturgerät mit mindestens zwei an seiner Außenwand angeordneten Saugfüßen versehen ist.

10. Vorrichtung nach einem der Ansprüche 5 bis 9, dadurch gekennzeichnet, daß das Reparaturgerät mit einer in der Nähe des Arbeitsarmes angeordneten verschwenkbaren Spachteleinrichtung versehen ist.

11. Vorrichtung nach einem der Ansprüche 5 bis 10, dadurch gekennzeichnet, daß der Arbeitsarm an der Stirnseite des Reparaturgerätes koaxial zu dessen Längsachse verdrehbar angelenkt ist und um 90° abgeknickt ist.

12. Vorrichtung nach einem der vorhergehenden Ansprüche, dadurch gekennzeichnet, daß dem Reparaturgerät eine Glocke zugeordnet ist, die den Arbeitsarm umgibt und mit einer Druckluftleitung verbunden ist sowie mit einer flexiblen, an der Kanalinnenwand anliegenden Dichtung versehen ist.

13. Vorrichtung nach Anspruch 13, dadurch gekennzeichnet, daß innerhalb der Glocke eine Polsterung vorgesehen ist zur liegenden Aufnahme einer Bedienungsperson.
